# EUROPEAN PATENT APPLICATION

(11) **EP 2 141 614 A1**
(43) Date of publication of application: **06.01.2010**
(21) Application number: 08012046.2
(22) Date of filing: 03.07.2008
(51) Int. Cl.: G06F 17/30

(54) **Method and device for logging browser events indicative of reading behaviour**

(71) Applicant: Hilgers, Philipp v., 10115 Berlin (DE)
(72) Inventor: Hilgers, Philipp v., 10115 Berlin (DE)
(74) Representative: Bach, Alexander

(57) **Abstract**

A method (100) for tracking interactions of a user with an electronic document displayed in a browser, wherein the browser is executed on a computer, comprises the steps of:
- determining (110) a state of visibility of the electronic document;
- sensing (120) a browser event;
- deciding, whether the event belongs to a set of pre-determined browser events indicative of the user's reading behaviour; and
- logging (150) the state of visibility to a machine-readable medium, if yes.

## Description

The present invention relates to the field of computer user interface technology in general. More specifically, the system relates to a method and device for tracking interactions of a user with an electronic document.

### TECHNICAL BACKGROUND AN PRIOR ART

The PC has become a common tool for reading news, articles and books. News sites and provider of all sorts of literature in the WWW are growing and an increasing amount of books and articles can be read online or downloaded due to Internet services like Jstor® or Google Scholar®.

However, current technology only provides limited means for tracking a user's actual interest in a particular document, which may ultimately be measured by how much a user has ultimately read of a document.

US 6,873,314 (Campbell) discloses a method and system for the recognition of reading skimming and scanning from eye-gaze patterns. However, means for tracking eye gaze patterns are not generally available. Particularly, present methods for eye tracking require special cameras and equipment (e.g. infrared light source) which are not available in a normal context, e.g. where a user reads a document on his notebook.

Alternatively, various techniques of web analytics are used to measure downloads and page visits by users looking up content in the WWW. The most common measurement is to count the page impressions of unique users, repeated visits and referring sites. Nevertheless, these measurements merely take into account that the consumption of the content differs greatly, due to the interest of the users and the content's relevance and the quality rated both from an individual and collective perspective.

Moreover, due to the developments in computer and network technology, the PC is used for many other tasks than reading electronic documents as well. Hence, not only various documents compete for the user's attention but they compete altogether with other tasks, such as typing, watching videos or pictures which can be performed on a PC either online or offline. Due to the multi-task capabilities of the current PCs these tasks need not to be performed one after the other but the user can switch easily from one task to another.

Current web analytic software is limited to tracking the task switches of users once they have requested, loaded or download a document. Hence, no exact information is provided on how much attention user actually paid to a document. The well known idea of extending the browser by code which observes events evoked by the user-browser interactions in order to explore the use of website was most recently presented by Richard Atterer et al. ("Knowing the User's Every Move - User Activity Tracking for Website Usability Evaluation and Implicit Interaction", WWW2006, May 22-26, 2006, Edinburgh, UK) and Harald Weinreich et al. ("Off the beaten Tracks: Exploring Three Aspects of Web Navigation". In Proceedings of World Wide Web Conference 2006, Edinburgh, UK, ACM Press, 133-142).

US 2007/0255754 A1 (Gheel) discloses a method and a system for recording, generating, storing and presenting user activity metadata for web page documents.

WO 2008/049403 A2 (Bosenick et al.) discloses a method for remote-controlled acquisition of user behaviour in the reception of web pages. The method comprises intercepting the HTTP data stream between a user's client computer system and a web server of a web page provider by means of a remote testing server and manipulating it in such a way that various parameters of the user's behaviour during the observation process and the interaction with the web page and also the transmitted data contents are registered in reconstructable fashion. However, Bosenick et al. do only provide a general tracking facility. They do not teach how specific user interactions and browser states may be correlated for determining the actual reading behaviour of the user.

It is therefore an object of the present invention to provide a method and device for tracking user interactions with an electronic document that allows more reliable inferences about whether a user has actually read portions of an electronic document and to which degree.

Finally, search engines for electronic documents according to the state of the art still suffer from vulnerability to manipulation of authors or publishers to artificially inflate the relevance of certain documents. Even a ranking based on backlink information, i.e. information from documents that contain links to the current document, are vulnerable to deceptive practices, e.g. by creating a high number of artificial backlinks under the guise of an objective third party.

It is therefore a further object of the present invention to provide a method for ranking electronic documents that is less prone to manipulation.

### SHORT SUMMARY OF THE INVENTION

This object is achieved by a method according to independent claim 1. Advantageous embodiments are defined in the dependent claims.

Various aspects of the present invention provide systems and methods for tracking significant interactions between a user and a browser when reading electronic documents in a browser. One aspect provides an objective method for differentiating between electronic documents or portions thereof which have been read and documents or portions of documents which were not read because necessary conditions (i.e. visibility and time of presentation) for reading were not fulfilled. The information that documents were loaded but not or hardly read is of great importance for content providers and search engine providers, since future user can be prevented from looking up documents which other users already found to be irrelevant or distractive. Moreover, providers of online advertisements can be protected from scripts which pretend that actual (human) users click on their banner advertisement, since such scripts will not show any reading behaviour detected by the present invention.

Another aspect of the invention is directed to a technique for tracking the reading behavior of a user within a common client-server environment, without the need for further tracking technology like eye gaze tracking technology. Furthermore the present invention provides a method for evaluating the relevance of documents by detecting the way how users are reading it in a way that is scalable and can be applied to extremely large databases, such as the World Wide Web.

A further aspect of the present invention is taking advantage of the fact that reading larger electronic documents will cause certain scroll actions; the detection of such scroll actions and their properties like different velocities and directions can be taken as indicators that users are reading a document, even if users may not be observed directly while reading. Another related aspect of the invention is that users, who are interested in reading a whole document, will make sure to load the different portions of a document in a certain manner and will produce significant overlaps of the sections. Both the chosen sections and their overlaps may indicate if and how users are reading a document.

Since the different aspects of the present invention lead to independent measures in detecting indicators if users are reading a document they can be used separately or complementally, based on the area of application.

Summarizing, the method and device according to the invention may be used for:
- determining if a user had by physical and physiological criteria the possibility to read a document within a browser, since reading requires the visibility of a text and a particular time range to read it. Hence, spending significant less or more time for a text of a particular length is a reliable indicator for the fact, that a user did not fully read the text, or, respectively, directed his attention to something else.
- determining if a user turned his attention to another document, another computer application and infers if he turned away from the computer display.
- gathering information about what documents the users were reading or scanning, allowing to infer their interest and level of attention.
- identifying documents, which were shortly looked up but rejected by users. In this way the system recognizes pages presenting irrelevant or distracting content, so called SPAM.
- identifying abnormal page requests that do not exhibit any human behaviour of reading electronic documents.
- determining the relevance of web documents for further ranking purposes within local machine databases, local area network databases, or wide area network databases such as the World Wide Web.
- enforcing productive feedback by leading to pages that others have found useful and eliminates counterproductive feedback by avoiding page visits others already found irrelevant.

### SHORT DESCRIPTION OF THE FIGURES

These and other aspects of the invention will become more evident when studying the following detailed description of the invention, in connection with the drawing, in which
- Fig. 1: shows a flowchart of a method according to an embodiment of the invention;
- Fig. 2: shows different visible areas of an electronic document displayed in different browser states;
- Fig. 3: shows a diagram of a state model for different scrolling behaviours of a user;
- Fig. 4: shows a flowchart of a method according to another embodiment of the invention;
- Fig. 5: shows a diagram of general environment in which one embodiment of the present invention may be deployed; and
- Fig. 6: shows a diagram of how the tracked information about the reading behaviour of users may be used in a computer-implemented document search engine.

### DESCRIPTION OF A PREFERRED EMBODIMENT OF THE INVENTION

The invention is based on the observation that the interactions of a user with an electronic document, as witnessed by certain sequences of browser states and events in relation to the document's properties, determines which parts of a document have most probably been read and which parts could not have been read due to measurements of the visibility of a document and its portions and their particular presentation time to the user. The basic necessary conditions for concluding that a user has actually read a particular portion of an electronic document are that (1) this portion was actually visible and (2) that the user had enough time to read it. The (cumulative) fulfilment or not of these two basic requirements may essentially be deducted from sequences of the browser states and events, which are monitored and logged by means of the present invention and which are described in the following sections.

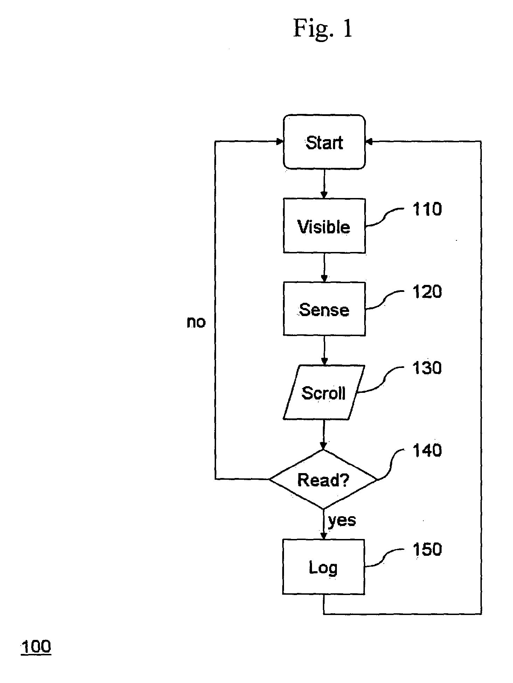

**Figure 1** shows a flow chart of a method for tracking interactions of a user with an electronic document displayed in a browser according to an embodiment of the invention.

In **step 110**, the method determines a state of visibility of the electronic document. The state of visibility may comprise all visible aspects and features of the currently displayed portion of an electronic document, e.g. the current width and length of the display window, the used font and its size, the length of the visible text measured by the number of characters, the dimension of a visible text block etc. Determining a state of visibility of an electronic document may first include determining which portion of the electronic document is currently visible. It may also include determining a timestamp of when the recorded portion of the electronic document has become visible.

More particularly, a necessary condition that a user has read a text within a document is that he has spent enough time. The time it takes to read a text depends on how difficult it is and individual factors like reading skills, the user's level of concentration and his level of interests. These factors differ from user to user and even the same user performs differently while reading different documents. Nevertheless, the time needed for reading a particular text is bound to lower and upper limits. Neither is it physiologically possible to speed reading up at will, nor is it possible to slow the reading speed down at will, even if individual differences exists. Therefore, a mean reading time for a visible portion of an electronic document may be applied either based on collective empirical data or on individual empirical data.

If the text has a certain length, the length of the visible portion of text in characters multiplied by an average reading time per character may define an average reading time for a visible portion of text. In this way it is possible to determine a lower limit: With less than a certain amount of time for reading it is very improbable that any user could have read the text, which was presented in a browser window.

Therefore, the system may also record the length of the portion of the electronic document which is actually shown in the browser. It may also record the moment or time when the document is presented by the browser and the moment the user either decides to load another document, manipulates the menu of the browser, writes text into forms, toggles to another window or tab of the same browser or to another application.

Consequently, the inventive system may record the time the user could actually see the document in the browser without being distracted by browser interaction which prevents him from reading. If the time during which the document or a portion thereof is displayed is less than a mean reading time of a text of a particular length, then the document and the visible portion thereof may be recorded and scored as not fully read. Here, the scores may measure the level of the reading involvement by the ratio of the text length and the time the text was actually visible.

In step 120, the method senses an event of the browser in which the electronic document is displayed. Browser events may be caused by the user's actions, the browser itself or the system platform on which the browser runs.

Browser events may generally include events that are indicative of a reading activity by the user and events that rather indicate that the user does not read or has stopped reading the electronic document altogether.

In particular, a **scroll event 130** may be sensed by the inventive method. More particularly, a significant indicator used by the invention for determining if a document was read by a user is his use of the scrollbar by mouse or certain keys from the keyboard to navigate through the document. The by far most common configuration computer users have is a setup which makes it necessary to scroll in order to read a document. As part of the state of visibility, the inventive system may determine the user's display resolution and the layout of the document, e.g. by the use of JavaScript® functions and related HTML's <*span*> or <*div*> tags. Hence, the system may evaluate to which positions a user has to scroll in order to see any part of the document, with a usual distance to the computer's display for reading, while producing only as much overlap of the visible text parts of the document as practical for continuing reading.

However, a **scroll event 130** is by itself inconclusive of the user's reading behaviour. It may either indicate that the user is reading while scrolling or that the user is navigating to another section of the document and reads the document mainly for the purpose of finding the next section of interest.

In **step 140** therefore, it may explicitly be determined whether the user actually reads or not while scrolling, using additional criteria. According to one embodiment of the invention, these criteria may comprise the velocity of the scrolling. Additionally, the scroll direction may be taken into account.

In **step 150,** the state of visibility previously determined for the electronic document in **step 110** is written to a log, if it has been determined that the user has stopped reading. In case of a scroll event, only the part having disappeared due to scrolling may be logged; in case of other events indicating that the user has stopped reading altogether, the entire state of visibility may be logged.

Further, the amount of time available to the user for reading the previously visible portion of text may be logged as well. Further, it may also be logged whether the previously visible portion of the document has been visible for the first time.

Optionally, the browser event and a timestamp of when the browser event has occurred may be logged as well. Alternatively

Finally, the procedure starts over.

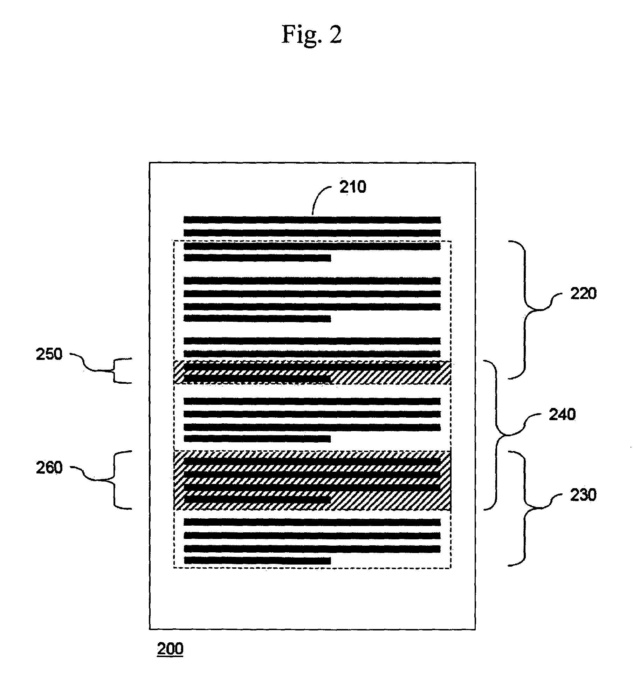

**Figure 2** shows different visible portions **220, 230** and **240** of an electronic document **200** displaying a text **210** in different browser states.

From the information logged by the above-described method, a sequence of scrolling interactions by the user having rendered different portions **220, 230** and **240** of the electronic document visible, e.g. first **220,** then **240** and finally **230,** may be reconstructed and evaluated.

As indicated by the braces, portions **220** and **230** cover separate areas of the electronic document. Portions **220** and **240** share an overlapping area **250,** and portions **230** and **240** share an overlapping area **260.**

As a new portion of text **240** becomes visible, a timer for timing a prescribed or average reading time for the new portion of the document or text **240** may be reset.

Common scroll behaviour while reading an electronic document is to read the section visible in the browser and then to scroll to the following section, while the user takes care that an overlap of both portions, the one just read and the new, appears. The overlap helps the user in making sure that he continued his reading where he stopped before navigating to another section. Arranging such an accurate overlap of some lines of texts, as exemplified by the overlap **250** in figure 2 does also indicate that the user most probably read the portion of the electronic document visible before the browser or scroll event since producing such accurate overlaps implies reading.

Furthermore, the user needs to adjust his scrolling movements slightly while coordinating the document scrolling with which parts he sees of the document. Such adjustments by the user can be detected by the system as typical scroll behaviour of the user reading a document, which can not be displayed as a whole on a display. An embodiment of the inventive method and system may detect these different modes of behaviour using a finite-state Markov model. Any other known mathematical method or technique for pattern recognition may be used in the practice of the present invention as well.

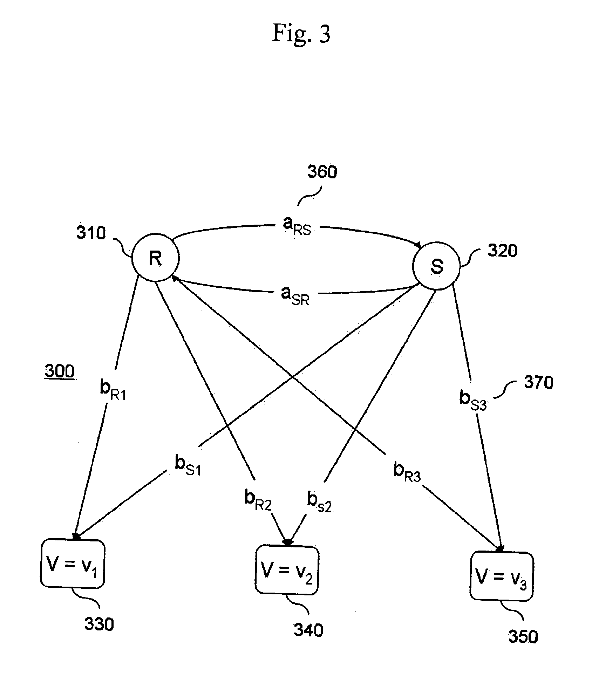

**Figure 3** shows a Hidden Markov Model (HMM) of user interactions with an electronic document displayed in a browser according to an embodiment of the invention.

According to the embodiment, the Hidden Markov Model (HMM) may discriminate two different internal states of the user that may occur in connection with a scroll event:
1. a **reading state** (R) **310,** wherein the user is assumed to actually read the document while scrolling through it; and
2. a **scanning state** (S) **320,** wherein the user is assumed to at most scan the document for single words, without actually reading it thoroughly.

The states are internal states of the user that may not be observed directly and are therefore termed hidden states. The transition probabilities a_{RS} and a_{SR} are denoted by reference sign **360.**

According to the invention, hidden states **310** and **320** may be based on the scrolling velocity V. In the present model, three different velocities v₁, v₂ and v₃ are assumed to be observable, denoted by reference signs **330, 340** and **350.** The coeffcients b_{Ri} and b_{Si}, denoted by reference sign **370,** specify the emission or output probabilities of the hidden states.

More specifically, a high scrolling velocity may indicate mere scanning of the document, whereas a lesser velocity may rather indicate that the user is actually reading.

The state transition probabilities *a* and the emission or output probabilities b may be determined through empirical experiments with actual users.

Unless a timeout occurs, it may also be assumed that in a phase of inactivity, the user concentrates on reading the textual content of the document.

Alternatively, a more refined Hidden Markov Model for determining whether a user actually reads an electronic document may comprise the following hidden states:
1. a **skimming** state (SK), wherein the user scrolls in order to quickly capture or comprehend a text;
2. a **scanning** state (SC), wherein a user scrolls in order to identify sections, keywords or titles and to skip to that section or title, without actually capturing or comprehending the text in between; and
3. a **reading** state (RE).

Instead of using the velocity and direction of scroll events as observable inputs, the model may be specified based on observable tokens of clock ticks T (e.g. every 0.5 seconds), upward moves r (in pixels) and downward moves h (also in pixels).These tokens for up- and downward moves due to scrolling action may occur at any time and constitute movements of the visible text in the corresponding direction. Furthermore, the model may imply state transition probabilities and output probabilities. Since an output sequence is given by the observable tokens, the most likely set of state transition and output probabilities can then be computed.

A **skimming** state (SK) may then be discovered by a sequence of clock ticks T and pixel movements having, for instance, the following form:
*TrrrTrrTrrrTrrrTrrr...*

In other words, skimming may be indicated by having scrolled down 14 pixels in 2 seconds and a slow, regular movement allowing reading.

Analogously, a **scanning** state (SC) may be discovered by a sequence of clock ticks T and pixel movements having, for instance, the following form:
*rrrrrrTrrrrrrrrrrrrrrrrrrrrhhhhThhhhhhhhrrr ...*

In other words, scanning may be indicated by having scrolled down 26 pixels, then having scrolled up 12 pixels, with a quick correction at the end. Text was not read but a document portion has become visible.

Finally, a **reading** state (RE) may be discovered by a sequence of clock ticks T and pixel movements having, for instance, the following form:
*TTTTTTTTTTTTTTTTTTTTTTTTTTTTTTTTTTTTTTTTTTTTTTTTT ...*

In other words, the visible portion of the electronic document has not changed for approximately 25 seconds.

In the reading state of both of the above-described models, it may additionally be determined whether the current overlap is an accurate overlap, reinforcing a conclusion that the user is actually reading. In general, the presence of an overlap may be determined because each preceding state of visibility of the electronic document is logged.

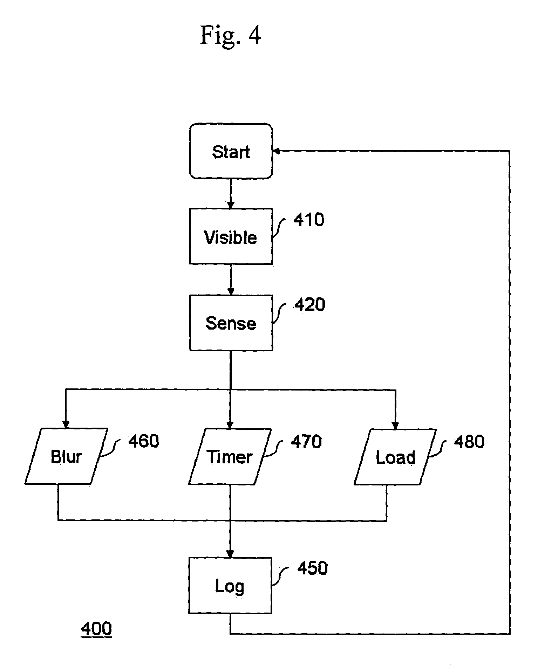

**Figure 4** shows a flowchart of a method 400 according to another embodiment of the invention. **Steps 410, 420,** and **450** are the same as **steps 110, 120** and **150** in the method described in connection with figure 1.

However, browser events may now generally include events that rather indicate that the user does not read or has stopped reading the electronic document altogether.

More particularly, the inventive system may determine the end of a reading process of a single document by the occurrence of a **blur event 460** or a **load event 480.**

A **blur event 460** indicates that the browser window in which the electronic document is displayed has lost the focus, e.g. because the user has selected a different application by clicking on another window.

A **load event 480** indicates that a new electronic document is loaded into the browser, thereby also indicating that the current electronic document is discarded.

Other events indicating that the user has stopped reading the current electronic documents may comprise events indicating that the user is typing into a form within a document or is using the mouse pointer to steer the menu selections within the browser.

The user may also stop reading by simply turning away from the display. This state may be determined by sensing a **timer event** or **timeout 470.**

More precisely, this state may be determined by measuring the time of no human or browser interaction. If this idle time is above of certain percentage of the average reading time of the visible text, this state may be registered as the end of the reading process.

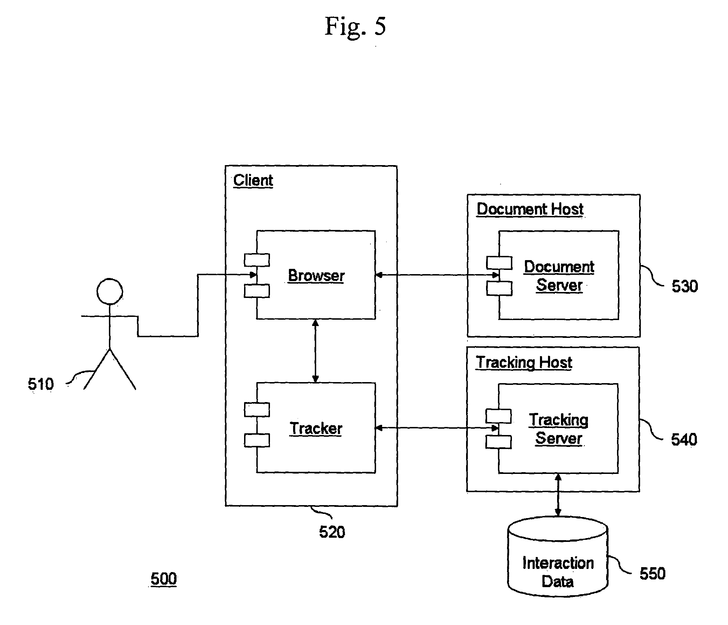

**Figure 5** shows a diagram of general environment in which one embodiment of the present invention may be deployed. The method may be implemented on a computer.

A user **510** may interact with a browser, installed on a client **520.** The browser may interact with a document host **530,** from which electronic documents are served to the browser by a document server.

The client **520** also comprises a tracker or tracking module, interacting with the browser. The tracking module may be loaded with the electronic document, e.g. as a script module, from the document server or from the tracking server. The tracking module or functionality may also be dynamically added to an electronic document in the form of script statements, by the document server or a specialized proxy.

Alternatively, the tracking module or tracker may also be pre-installed on the client, e.g. as a browser extension.

More specifically, on the client side, the inventive method may be implemented in the computer programming language JavaScript® to extend the functionality of standard browsers on a computer. The electronic documents can also be modified directly with JavaScript® for the same purpose and in transparent way for the users.

Instead of using an extension for standard browsers the implementation may also be implemented in JavaScript® or any other suitable script language within a HTML page loaded into a browser. The document may be modified easily with a generic JavaScript® code either by the content provider providing the document or in the moment a user loads the document into his browser when a proxy server is used between the server providing the document and the user's browser loading the document onto the user's PC. Therefore, the user does not necessarily need to change his PC configuration or to install any kind of supplementary software. All he has to use is a standard browser which is part of a standard PC configuration today. By embedding the inventive system directly into the document the content provider will gather precise information about the reading behaviour of its users reading the provided documents.

The tracking module may also interact with a remote tracking host **540,** on which a tracking server is installed. The tracking host may interact with an interaction database **550,** storing the interaction data monitored by the tracker or tracking module and logged to the tracking host **540.**

According to a further aspect of the invention, the method for determining reading scores of electronic documents or portions thereof may also be used for enhancing the quality of search engine results. In one embodiment of the invention, the rank of a document may depend on an average reading score for the document, as detected and accumulated by the above described methods. In a further embodiment, the rank of a document may depend on an average reading score for a portion of the electronic document in which a search keyword appears.

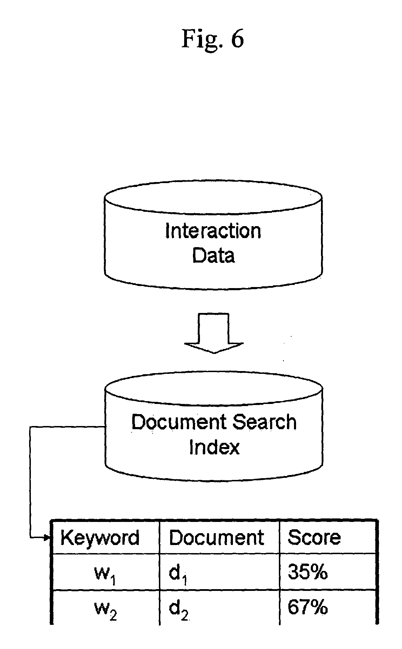

**Figure 6** shows a diagram of how the tracked information about the reading behaviour of users may be employed in a computer-implemented document search engine. Based on the interaction database, an index for a search engine may be built, wherein the relevance of a document depends on a degree to which a search keyword has been perceived or read in the document by the average user. E.g., if the keyword appears in a paragraph that has on the average not been read by users, the electronic document may receive a lower relevance score as a document wherein the keyword appears in a portion or section that has been read very often or with great intensity.

Using the reading scores determined by the inventive methods for ranking electronic documents in a search engine application avoids manipulation of the ranking algorithm by the document author or publisher that is essentially possible when a ranking is based on a number of backlinks to the particular document, namely by intentionally setting or generating a large number of backlinks themselves.

### SUMMARY

In summary, the inventive system recognizes if documents were read or not without using the need of any additional technology beside what the most frequently used electronic devices for private and business purposes like personal computers, handhelds or other computer reading devices have to offer anyhow.

By measuring the interaction between the user and the browser and by the analysis of a document's layout which was displayed, the inventive system logs information that allows evaluating in how far a user has read a document in a browser.

Based on information delivered by the inventive method may identify documents, which were shortly looked up but rejected by users. In this way the system may recognize documents which are of no interest to the user, either because of the user's specific interests or because the documents presented irrelevant or distracting content, so called SPAM. The inventive system contributes significant information about the relevance of documents and help to rank documents of a collection of documents within local machine databases, local area network databases, or wide area network databases such as the World Wide Web.

Also, the system may evaluate the average time it takes to read any of its parts. Common pattern of scrolling for the purpose of reading a document may be compared with the recorded scroll movements the user actually has performed.

## Claims

1. Method (100) for tracking interactions of a user with an electronic document displayed in a browser, wherein the browser is executed on a computer, comprising the steps of:
- determining (110) a state of visibility of the electronic document;
- sensing (120) a browser event;
- deciding, whether the event belongs to a set of pre-determined browser events indicative of the user's reading behaviour; and
- logging (150) the state of visibility to a machine-readable medium, if yes.

2. Method according to claim, wherein the set of pre-determined browser events comprises a scroll event (130).

3. Method according to claim 2, further comprising the steps of:
- deciding (140) whether the user is reading the electronic document, based on a velocity and direction of a plurality of scroll events (130); and
- logging (150) the state of visibility to a machine-readable medium, if yes.

4. Method according to claim 3, wherein the step of deciding is based on a Hidden Markov Model (HMM).

5. Method according to claim 3, wherein deciding (140) whether the user is reading comprises determining the presence of an accurate overlap of the currently visible portion of the electronic document and a previously visible portion.

6. Method according to claim 1, wherein the set of pre-determined browser events comprises browser events indicating that the user has stopped reading the electronic document.

7. Method according to claim 6, wherein the browser events indicating that the user has stopped reading the electronic document comprise
- a browser event indicating that the electronic document has lost focus;
- a browser event indicating that the user loads a new electronic document; or
- a browser event indicating the user is typing.

8. Method according to claim 6, wherein the browser events indicating that the user has stopped reading the electronic document comprises a timeout.

9. Method according to claim 8, wherein the timeout is set based on a length of a visible portion of the document.

10. Method according to claim 1, wherein the state of visibility of the electronic document comprises the portion of the electronic document that is currently visible to the user.

11. Method according to claim 10, wherein the state of visibility of the electronic document further comprises a timestamp of when the portion has become visible to the user.

12. Method according to claim 9, wherein the state of visibility of the electronic document further comprises a timestamp of when the portion has become visible to the user for the first time.

13. Method for ranking a plurality of documents, wherein the rank of a document is determined based on a log generated by a method according to claim 1.

14. Method according to claim 1, wherein logging the browser state comprises transmitting the state of visibility to a remote host.

15. Device for tracking interactions of a user with an electronic document displayed in a browser, wherein the browser is executed on a computer, comprising:
- means for determining (110) a state of visibility of the electronic document;
- means for sensing (120) a browser event;
- means for deciding, whether the event belongs to a set of pre-determined browser events indicative of the user's reading behaviour; and
- means for logging (150) the state of visibility to a machine-readable medium, if yes.

## Amended claims

### Amended claims in accordance with Rule 137(2) EPC.

**1.** Computer-implemented method (100) for tracking interactions of a user with an electronic document displayed in a browser, wherein the browser is executed on a computer, comprising the steps of:
- determining (110) one or several features of a currently displayed portion of the electronic document, including which portion of the electronic document is currently visible;
- detecting (120) a browser event;
- deciding, whether the browser event is a scroll event; and
- logging (150) the determined features to a machine-readable medium, if yes.

**2.** Method according to claim 1, wherein the determined features comprise a timestamp of when the currently visible portion of the electronic document was displayed.

**3.** Method according to claim 2, further comprising the steps of:
- deciding (140) whether the user is reading the electronic document, based on a velocity and direction of a plurality of scroll events (130); and
- logging (150) the state of visibility to a machine-readable medium, if yes.

**4.** Method according to claim 3, wherein the step of deciding is based on a Hidden Markov Model (HMM).

**5.** Method according to claim 3, wherein deciding (140) whether the user is reading comprises determining the presence of an accurate overlap of the currently visible portion of the electronic document and a previously visible portion.

**6.** Method according to claim 1, wherein the set of pre-determined browser events comprises browser events indicating that the user has stopped reading the electronic document.

**7.** Method according to claim 6, wherein the browser events indicating that the user has stopped reading the electronic document comprise
- a browser event indicating that the electronic document has lost focus;
- a browser event indicating that the user loads a new electronic document; or
- a browser event indicating the user is typing.

**8.** Method according to claim 6, wherein the browser events indicating that the user has stopped reading the electronic document comprises a timeout.

**9.** Method according to claim 8, wherein the timeout is set based on a length of a visible portion of the document.

**10.** Method according to claim 9, wherein the state of visibility of the electronic document further comprises a timestamp of when the portion has become visible to the user for the first time.

**11.** Method for ranking a plurality of documents, wherein the rank of a document is determined based on a log generated by a method according to claim 1.

**12.** Method according to claim 1, wherein logging the browser state comprises transmitting the state of visibility to a remote host.

**13.** Device for tracking interactions of a user with an electronic document displayed in a browser, wherein the browser is executed on a computer, comprising:
- means for determining (110) one or several features of a currently displayed portion of the electronic document, including which portion of the electronic document is currently visible;
- means for detecting (120) a browser event;
- means for deciding, whether the browser event is a scroll event; and
- means for logging (150) the determined features to a machine-readable medium, if yes.
